# EUROPÄISCHE PATENTSCHRIFT

(11) **EP 3 071 896 B1**
(45) Veröffentlichungstag und Bekanntmachung des Hinweises auf die Patenterteilung: **22.07.2020**
(21) Anmeldenummer: 14802350.0
(22) Anmeldetag: 12.11.2014
(51) Int. Cl.: F24F 13/32, F24H 9/06, H02B 1/30, H02B 1/40, H02B 1/42

(54) **HALTEVORRICHTUNG FÜR EIN GEHÄUSE UND VERFAHREN ZUR MONTAGE DES GEHÄUSES UNTER VERWENDUNG DER HALTEVORRICHTUNG**
MOUNTING SUPPORT FOR A CASING AND METHOD FOR MOUNTING A CASING USING THE SAME
SUPPORT DE MONTAGE POUR UNE ENCEINTE ET MÉTHODE DE MONTER UNE ENCEINTE UTILISANT LEDIT SUPPORT

(30) Priorität: 19.11.2013 DE 102013112761
(43) Veröffentlichungstag der Anmeldung: 28.09.2016
(73) Patentinhaber: R. STAHL Schaltgeräte GmbH, 74638 Waldenburg (DE)
(72) Erfinder: STECKLING, Tim, 74629 Pfedelbach (DE); GAJDITSCH, Christoph, 74670 Forchtenberg (DE)
(74) Vertreter: Rüger Abel Patentanwälte PartGmbB
(86) Internationale Anmeldenummer: PCT/EP2014/074406
(87) Internationale Veröffentlichungsnummer: WO 2015/074933

(56) Entgegenhaltungen:
- WO-A1-2011/119613
- DE-U1-202005 007 318
- US-A- 5 796 585
- US-A1- 2009 251 033
- US-B1- 6 354 555

## Beschreibung

Die Erfindung betrifft eine Haltevorrichtung für ein Gehäuse sowie ein Verfahren zum Anbringen des Gehäuses mit Hilfe der Haltevorrichtung an einer Anbringungsfläche. Die Anbringungsfläche kann beispielsweise eine Wandfläche insbesondere im Außenbereich sein.

Ein Gehäuse mit einer Haltevorrichtung, zum Anbringen des Gehäuses an einer Anbringungsfläche ist beispielsweise aus DE 20 2005 007 318 U1 bekannt. Das Gehäuse besteht dort aus drei Seitenflächen sowie einem schräg geneigten Dach. Zur Anbringungsfläche hin ist das Gehäuse offen. Mit Hilfe von Haken oder Schrauben kann das Gehäuse an der Anbringungsfläche angebracht werden. Das bekannte Gehäuse dient beispielsweise zum Abdecken einer Lüftungseinheit.

US 6 354 555 B1 beschreibt eine Einrichtung zum Befestigen einer Außeneinheit einer Klimaanlage an einer Wand mit den Merkmalen des Oberbegriffs des Patentanspruches 1.

Ausgehend von diesem Stand der Technik kann es als Aufgabe der vorliegenden Erfindung angesehen werden, die Haltevorrichtung zu verbessern und eine einfache und flexible Montage eines Gehäuses zu ermöglichen.

Diese Aufgabe wird durch eine Haltevorrichtung mit den Merkmalen des Patentanspruches 1 sowie ein Verfahren mit den Merkmalen des Patentanspruchs 15 gelöst. Bevorzugte Ausführungsformen der Erfindung sind in den abhängigen Patentansprüchen definiert.

Die Haltevorrichtung weist zwei Halteteile auf. Jedes Halteteil hat einen Anbringungsabschnitt, der dazu eingerichtet ist, mit Hilfe eines Anbringungsmittels, beispielsweise einer Dübelverbindung und/oder einer Schraubverbindung, an einer Anbringungsfläche angebracht zu werden. Beispielsweise kann der Anbringungsabschnitt entsprechende Löcher zur Aufnahme von Schrauben aufweisen. Die beiden Halteteile sind vorzugsweise als separate Halteteile ausgeführt oder sind gegeneinander verschiebbar, so dass sie in einer Querrichtung in einem variablen Abstand an der Anbringungsfläche anbringbar sind.

Jedes Halteteil hat einen sich in Längsrichtung erstreckenden Halteabschnitt. Jedem Halteabschnitt ist ein Befestigungsteil zugeordnet. Das Befestigungsteil kann mit dem Halteabschnitt derart in Eingriff gebracht werden, dass es in Längsrichtung relativ zum Halteabschnitt verschiebbar ist. Die Befestigungsteile sind am Gehäuse befestigt und stellen die Verbindung zwischen dem Gehäuse und den Halteteilen her. Die Relativverschiebung zwischen den Befestigungsteilen und den Halteabschnitten ist vorzugsweise durch eine spielbehaftete, formschlüssige Verbindung mit einem Bewegungsfreiheitsgrad in Längsrichtung erreicht. Die Halteabschnitte bilden bei einem Ausführungsbeispiel jeweils eine Schiene, an bzw. in der das zugeordnete Befestigungsteil in Längsrichtung verschiebbar angeordnet werden kann. Insbesondere ist ein Befestigungsteil, das mit dem zugeordneten Halteabschnitt in Eingriff steht, entlang des Halteabschnitts, abgesehen von einem Bewegungsspiel, ausschließlich in Längsrichtung bewegbar, so dass lediglich ein Freiheitsgrad zur Relativbewegung zwischen dem Befestigungsteil und dem Halteteil verbleibt.

Die Haltevorrichtung weist außerdem wenigstens ein Arretierteil auf. Das Arretierteil ist ebenfalls am Gehäuse befestigt, vorzugsweise an derselben Gehäuseseite wie die Befestigungsteile. Es können auch mehrere Arretierteile vorhanden sein. Bei einem bevorzugten Ausführungsbeispiel sind die Befestigungsteile und das wenigstens eine Arretierteil baugleich ausgestaltet, so dass lediglich der Anbringungsort am Gehäuse bzw. die Orientierung relativ zum Gehäuse über die Funktion dieses Bauteils als Arretierteil oder als Befestigungsteil entscheidet.

Das Arretierteil arbeitet mit einem Arretierabschnitt zusammen. Wenigstens eines der beiden Halteteile hat einen Arretierabschnitt. Vorzugsweise weisen beide Halteteile jeweils einen Arretierabschnitt auf, so dass entsprechend zwei Arretierteile zur Haltevorrichtung gehören. Das Arretierteil kann mit den zugeordneten Arretierabschnitten in Eingriff gebracht werden. Die Relativbewegung zwischen dem Befestigungsteil und dem Halteteil in Längsrichtung ist zumindest in eine Richtung bzw. zu einer Seite hin begrenzt oder unterbunden, wenn das Arretierteil und der zugeordnete Arretierabschnitt in Eingriff stehen. Ist die Längsrichtung der Halteteil in Vertikalrichtung ausgerichtet, kann das Arretierteil die Relativbewegung des Befestigungsteils zumindest vertikal nach unten einseitig begrenzen oder unterbinden.

Durch die Haltevorrichtung können unterschiedlich große Gehäuse einfach und flexibel an einer Anbringungsfläche lösbar befestigt werden. Der Abstand der beiden Halteteile zueinander wird an die Größe des Gehäuses angepasst. Eine weitere Anpassungsmöglichkeit kann sich auch aus dem Anbringen der Befestigungsteile und des Arretierteils am Gehäuse ergeben. In Längsrichtung unterschiedlich dimensionierte Gehäuse können einfach und schnell mittels der Haltevorrichtung an der Anbringungsfläche montiert werden. Die Länge der Halteabschnitte in Längsrichtung kann beispielsweise dem Größenunterschied der anzubringenden Gehäuse in Längsrichtung entsprechen. Vorzugsweise ist die Länge der Halteabschnitte so gewählt, dass die Halteteile für verschieden große Gehäuse verwendbar sind. Die Länge der Halteabschnitte in Längsrichtung kann bei einem Ausführungsbeispiel zum Anbringen von Gehäusen in verfügbaren Standardgrößen im Bereich von 20 cm bis 70 cm und insbesondere 40 cm bis 62 cm betragen. Bei in Eingriff stehendem Arretierteil ändert sich abhängig von der Dimension des Gehäuses in Längsrichtung die Position der Befestigungsteile gegenüber dem zugeordneten Halteanschnitt. Bei einem Ausführungsbeispiel wird das Gehäuse nur über die Befestigungsteile und das Arretierteil mit den beiden Halteteilen (12) verbunden. Eine Schraubverbindung oder eine andere zusätzliche formschlüssige Verbindung entfällt. Schrauben können bei einer Ausführung als Spannmittel zur Reduzierung oder Eliminierung eines Spiels verwendet werden ohne dabei eine wesentliche Haltefunktion zu übernehmen, um die Last des Gehäuses an den Halteteilen abzustützen.

Bei einem bevorzugten Ausführungsbeispiel weist das wenigstens eine Arretierteil und/oder jedes Befestigungsteil zwei mit Abstand zueinander angeordnete Schenkelteile auf, die einen zwischen den Schenkelteilen angeordneten Spalt begrenzen. Dieser Spalt ist insbesondere durchgängig und an drei Seiten offen. An zwei Seiten ist der Spalt durch jeweils ein Schenkelteil begrenzt. An einer weiteren Seite kann der Spalt durch ein Querteil zumindest teilweise geschlossen sein, das die beiden Schenkelteile miteinander verbindet.

Vorzugsweise verschließt das Querteil des Arretierteils den Spalt in Längsrichtung an einer Seite zumindest teilweise. Ferner ist es bevorzugt, wenn das Querteil jedes Befestigungsteils den Spalt in einer Querrichtung zumindest teilweise verschließt.

Die Querrichtung ist rechtwinklig zur Längsrichtung orientiert. Die Querrichtung und die Längsrichtung spannen eine Ebene auf, die parallel zur Anbringungsfläche ausgerichtet ist. Bei hergestellter Montage, kann die Längsrichtung beispielsweise der Vertikalrichtung entsprechen, während die Querrichtung der Horizontalrichtung entspricht.

Steht das Arretierteil mit dem zugeordneten Arretierabschnitt in Eingriff, können die beiden Schenkelteile und das Querteil den Arretierabschnitt am zugeordneten Halteteil umgreifen. Entsprechend können die beiden Schenkelteile und das Querteil eines Befestigungsteils den zugeordneten Halteabschnitt des Halteteils umgreifen. Der Arretierabschnitt bzw. der Halteabschnitt durchsetzen dann jeweils den durch die Schenkelteile und das Querteil begrenzten Spalt.

Vorzugsweise grenzt der Halteabschnitt jedes Halteteils an einen sich an einer Längsrichtung erstreckenden Längsschlitz an. Durch diesen Längsschlitz hindurch, kann das Befestigungsteil mit dem Halteabschnitt in Eingriff gebracht und in Längsrichtung verschiebbar angeordnet sein. Dabei kann sich in Längsrichtung an den Halteabschnitt jedes Halteteils eine Einführungsaussparung anschließen, in die der Längsschlitz einmündet. Das Befestigungsteil kann über die Einführungsaussparung mit dem Halteabschnitt in Eingriff gebracht werden. Die Einführaussparung ist sozusagen eine Erweiterung des Längsschlitzes in Querrichtung.

Bei einem bevorzugten Ausführungsbeispiel weist wenigstens eines der beiden Halteteile eine Arretieraussparung auf, an die der Arretierabschnitt angrenzt. Die Arretieraussparung kann beispielsweise in Längsrichtung auf der dem Halteabschnitt abgewandten Seite offen sein, beispielsweise vertikal nach oben. Bei einer Ausführung kann das Arretierteil am Arretierabschnitt sozusagen eingehakt werden.

Es ist außerdem vorteilhaft, wenn zumindest eines der beiden Halteteile einen Seitenwandabschnitt aufweist, der schräg oder rechtwinklig zu einer durch die Längsrichtung und die Querrichtung aufgespannten Ebene orientiert ist. Insbesondere ragt der Seitenwandabschnitt schräg oder rechtwinklig vom Anbringungsabschnitt weg. Der Seitenwandabschnitt begrenzt einen Aufnahmebereich für das Gehäuse. So kann sich der Aufnahmebereich beispielsweise auch zwischen zwei Seitenwandabschnitten befinden, wenn beide Halteteile einen derartigen Seitenwandabschnitt aufweisen.

Mithin kann die Haltevorrichtung sowohl zum Tragen des Gehäuses, als auch zum Schutz des Gehäuses vor Umwelteinflüssen, wie Niederschlag oder Sonneneinstrahlung dienen.

Die Haltevorrichtung weist ein Verbindungsteil auf. Das Verbindungsteil kann über ein erstes Ende mit dem einen Halteteil und über ein zweites Ende mit dem jeweils anderen Halteteil verbunden werden, so dass es sich in Querrichtung zwischen den beiden Halteteilen erstreckt. Bei hergestellter Verbindung ist es vorzugsweise in Längsrichtung mit Abstand zu den Halteabschnitten angeordnet. Das Verbindungsteil kann einen Wandabschnitt aufweisen, der, wenn die Längsrichtung in Vertikalrichtung ausgerichtet ist, als Dach dient. Der Wandabschnitt des Verbindungsteils kann gemeinsam mit dem wenigstens einen Seitenwandabschnitt eines Halteteils den Aufnahmebereich begrenzen und einen entsprechenden Schutz vor Umwelteinflüssen bewirken. Vorzugsweise ist der Wandabschnitt schräg oder rechtwinklig zu einer Ebene ausgerichtet, die durch die Längsrichtung und die Querrichtung aufgespannt wird.

Das Verbindungsteil weist wenigstens einen Sicherungsabschnitt auf. Der Sicherungsabschnitt begrenzt oder unterbindet bei hergestellter Verbindung des des Verbindungsteils mit den beiden Halteteilen eine Bewegung des wenigstens einen Arretierteils in Längsrichtung. Beispielsweise ist es möglich, dass der Sicherungsabschnitt die Bewegung des Arretierteils in Längsrichtung von den Arretierabschnitt des Halteteils weg begrenzt oder unterbindet.

Die Abmessung des Verbindungsteils kann in Querrichtung verändert werden. Hierfür weist das Verbindungsteil zwei ineinander oder aneinander verschiebbare Verbindungselemente auf. Die Verbindungselemente können beispielsweise teleskopierbar angeordnet sein. Insbesondere können die beiden Verbindungselemente den Wandabschnitt bilden und daher als zwei relativ zueinander verschiebbare Wandbestandteile ausgestaltet sein.

Bei einer bevorzugten Ausführungsform kann an wenigstens einem Befestigungsteil und/oder wenigstens einem Arretierteil ein Spannmittel vorhanden sein, um ein Bewegungsspiel zwischen dem Befestigungsteil und dem Halteabschnitt bzw. zwischen dem Arretierteil und dem Arretierabschnitt zu eliminieren und eine stabile Gehäuselagerung zu gewährleisten, wenn das Gehäuse an der Haltevorrichtung angebracht ist. Als Spannmittel kann beispielsweise wenigstens eine Spannschraube dienen, die durch ein Gewindeloch im Arretierteil oder im Befestigungsteil gegen den zugeordneten Halteabschnitt bzw. Arretierabschnitt spannbar ist.

Das Gehäuse wird wie folgt montiert:
Die beiden Halteteile werden mit Hilfe von Anbringungsmitteln, beispielsweise Schraub- und/oder Dübelverbindungen, an einer Anbringungsfläche befestigt. Die beiden Halteabschnitte der Halteteile haben dabei in Querrichtung einen Abstand, der an die Abmessung des Gehäuses angepasst ist. Vorher, nachher oder gleichzeitig werden die beiden Befestigungsteile und das wenigstens eine Arretierteil am Gehäuse befestigt.

Die Befestigungsteile werden mit dem jeweils zugeordneten Halteabschnitt in Eingriff gebracht. Das Gehäuse kann dann in Längsrichtung verschoben werden und ist in Querrichtung sowie rechtwinklig zur Quer- und Längsrichtung durch den Eingriff der Befestigungsteile mit den Halteabschnitten in der Bewegbarkeit begrenzt oder gehindert. Das Gehäuse wird in Längsrichtung verschoben, bis das wenigstens eine Arretierteil in Eingriff gelangt mit dem Arretierabschnitt, so dass eine weitere Bewegung des Gehäuses zumindest zu einer Seite in Längsrichtung - beispielsweise vertikal nach unten - verhindert ist.

Das Verbindungsteil wird mit den beiden Halteteilen verbunden. Ein Sicherungsabschnitt am Verbindungsteil unterbindet oder begrenzt eine Relativbewegung des Arretierteils in Längsrichtung vom Arretierabschnitt weg. Das Gehäuse ist dann gegen eine Bewegung in alle Raumrichtungen gesichert.

Schließlich kann optional ein Spannmittel verwendet werden, um verbleibendes Bewegungsspiel der Befestigungsteile und/oder des wenigstens einen Arretierteils relativ zu den Halteteilen zu reduzieren oder zu eliminieren.

Nachfolgend werden bevorzugte Ausführungsbeispiele der Erfindung anhand der beigefügten Zeichnung im Einzelnen erläutert. Es zeigen:
Figur 1 eine perspektivische Darstellung eines Ausführungsbeispiels der Haltevorrichtung mit einem Gehäuse in einer Ansicht auf die Vorderseite,
Figur 2 das Ausführungsbeispiel aus Figur 1 in einer Ansicht auf die der Vorderseite entgegengesetzte Rückseite,
Figur 3 eine perspektivische Teilansicht des Ausführungsbeispiels gemäß der Figuren 1 und 2 mit Blick schräg von oben auf die Rückseite,
Figur 4 eine Teildarstellung des Ausführungsbeispiels gemäß der Figuren 1 bis 3 mit Blick seitlich schräg auf die Rückseite und
Figur 5 eine perspektivische Darstellung eines Bauteils, das als Arretierteil und/oder als Befestigungsteil der Haltevorrichtung verwendet werden kann.

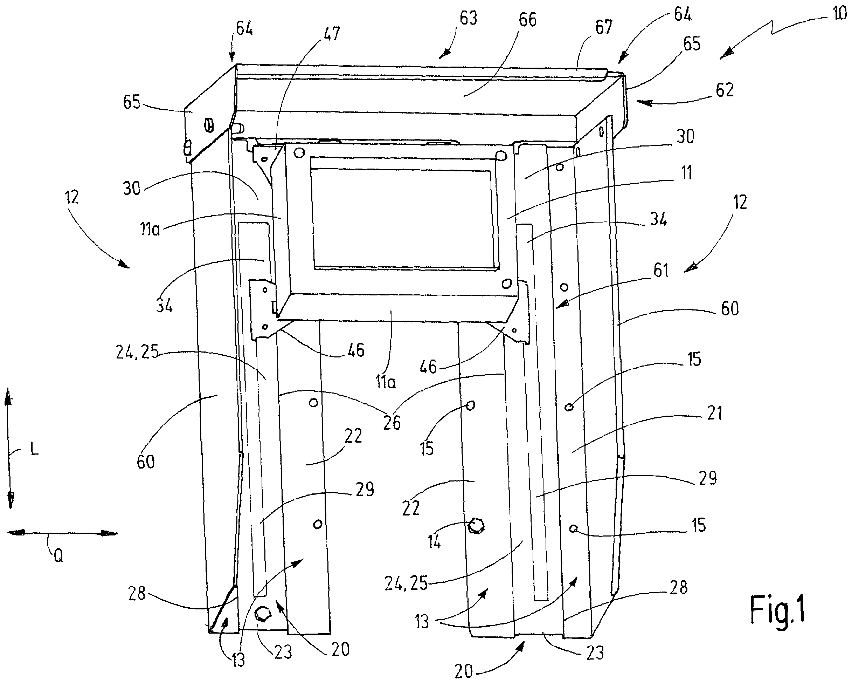

In den Figuren 1 bis 4 ist ein Ausführungsbeispiel für eine Haltevorrichtung 10 für ein Gehäuse 11 dargestellt. Die Haltevorrichtung 10 trägt das Gehäuse 11 und dient zum Halten bzw. Verbinden des Gehäuses 11 mit einer nicht dargestellten Anbringungsfläche. Das Gehäuse 11 wird somit mittelbar über die Haltevorrichtung 10 an der Anbringungsfläche gehalten. Die Haltevorrichtung 10 dient beim Ausführungsbeispiel insbesondere zum Anordnen des Gehäuses in einem Außenbereich und stellt gleichzeitig einen Schutz vor Umwelteinflüssen, insbesondere vor Sonneneinstrahlung und/oder Niederschlag für das Gehäuse bereit.

Die Haltevorrichtung 10 weist zwei Halteteile 12 auf, die symmetrisch gegenüber einer zwischen den beiden Halteteilen verlaufenden Ebene angeordnet sind. Jedes Halteteil 12 weist einen Anbringungsabschnitt 13 auf, mittels dem das Halteteil 12 an der Anbringungsfläche angeordnet und insbesondere mit Hilfe eines Anbringungsmittels an der Anbringungsfläche angebracht bzw. befestigt werden kann. Als Anbringungsmittel kann beispielsweise wenigstens eine und insbesondere mehrere Schrauben 14 dienen, die durch Anbringungslöcher 15 im Anbringungsabschnitt 13 hindurchgeführt und mit der Anbringungsfläche verschraubt werden können.

Der Anbringungsabschnitt 13 jedes Halteteils 12 weist wenigstens eine Anlagefläche 16 auf, mit der das Halteteil 12 an der zugeordneten Anbringungsfläche anliegt. Bei dem hier beschriebenen bevorzugten Ausführungsbeispiel hat die Anlagefläche 16 wenigstens einen ersten Flächenabschnitt 16a und einen zweiten Flächenabschnitt 16b. Die beiden Flächenabschnitte 16a, 16b sind in einer Querrichtung Q voneinander beabstandet. Die Querrichtung Q ist in an der Anbringungsfläche angebrachter Haltevorrichtung 10 vorzugsweise horizontal ausgerichtet. In jedem der beiden Flächenabschnitte 16a, 16b sind jeweils ein oder mehrere Anbringungslöcher 15 vorhanden. Die beiden Flächenabschnitte 16a, 16b sind beim Ausführungsbeispiel in einer gemeinsamen Ebene angeordnet.

Die beiden Flächenabschnitte 16a, 16b eines Halteteils 12 sind über einen Haltebereich 20 an einer oder mehreren Stellen miteinander verbunden. Der Haltebereich 20 weist beim Ausführungsbeispiel keine Bestandteile auf, die durch die Ebene hindurchragen, in der sich die Anlagefläche 16 bzw. die beiden Flächenabschnitte 16a, 16b befinden. Der Haltebereich 20 ist von der Ebene, in der sich die Anlagefläche 16 erstreckt beabstandet. Beispielsgemäß weist der Anbringungsabschnitt 13 einen plattenförmigen ersten Schenkel 21 sowie einen plattenförmigen zweiten Schenkel 22 auf. An dem ersten Schenkel 21 ist der erste Flächenabschnitt 16a und am zweiten Schenkel 22 der zweite Flächenabschnitt 16b vorhanden. Die beiden Schenkel 21, 22 sind über einen Steg 23 des Haltebereichs 20, der sich in Querrichtung Q zwischen den beiden Schenkeln 21, 22 erstreckt, verbunden.

An den Steg 23 schließt sich im Haltebereich 20 ein sich in eine Längsrichtung L erstreckender Halteschenkel 24 an. Der Halteschenkel 24 bildet einen Halteabschnitt 25 des Halteteils 12. Der Halteschenkel 24 ist über eine doppelte Biegung oder Kröpfung mit dem zweiten Schenkel 22 verbunden. Der Halteschenkel 24 erstreckt sich somit in einer Ebene, die parallel zu der Ebene der Anlagefläche ausgerichtet und gegenüber der Ebene der Anlagefläche versetzt ist. In Längsrichtung L erstreckt sich zwischen den zweiten Schenkel 22 sowie dem Halteschenkel 24 und dem Steg 23 eine erste Verbindungskante 26. Über diese Verbindungskante 26 ist auch der Steg 23 mit dem zweiten Schenkel 22 verbunden.

Die Längsrichtung L ist rechtwinklig zur Querrichtung Q ausgerichtet. Die Längsrichtung L und die Querrichtung Q spannen eine Ebene auf, in der sich die Anlagefläche 16 befindet. In montiertem Zustand der Haltevorrichtung 10 ist die Längsrichtung L vorzugsweise vertikal ausgerichtet.

In Querrichtung Q erstreckt sich ausgehend vom Steg 23 in Längsrichtung L ein Längsschenkel 27, der in Querrichtung Q mit Abstand zum Halteschenkel 24 angeordnet ist. Der Halteschenkel 24 und der Längsschenkel 27 erstrecken sich in derselben Ebene. Der Längsschenkel 27 ist über eine doppelte Biegung bzw. Kröpfung mit dem ersten Schenkel 21 verbunden, wodurch eine sich in Längsrichtung L erstreckende, den ersten Schenkel 21 mit den Längsschenkel 27 und dem Steg 23 verbindende zweite Verbindungskante 28 bildet. Die beiden Verbindungskanten 26, 28 erstreckten sich in Längsrichtung L parallel zueinander und ragen quer von der Ebene weg, in der sich die Anlagefläche 16 befindet.

Im Haltebereich 20 erstreckt sich in Längsrichtung L ein Längsschlitz 29. Der Längsschlitz 29 wird in Querrichtung Q einerseits vom Halteschenkel 24 und andererseits vom Längsschenkel 27 begrenzt. In Längsrichtung L wird der Längsschlitz 29 auf der einen Seite durch den Steg 23 und auf der anderen Seite durch einen Endabschnitt 20 des Haltebereichs 20 begrenzt.

Angrenzend an den Endabschnitt 30 weist der Längsschlitz 29 eine Einführaussparung 34 auf, die den Längsschlitz 29 in Querrichtung Q erweitert. Die Einführaussparung 34 ist beispielsgemäß dadurch gebildet, dass sich der Halteschenkel 24 in Längsrichtung L nicht bis zum Endabschnitt 30 erstreckt, sondern mit Abstand dazu endet. Die erste Verbindungskante 26 erstreckt sich auch entlang der Einführaussparung 34 bis zum Endabschnitt 30. Dadurch ist eine ausreichende Stabilität der Verbindung zwischen dem zweiten Schenkel 22 und dem Haltebereich 20 gewährleistet.

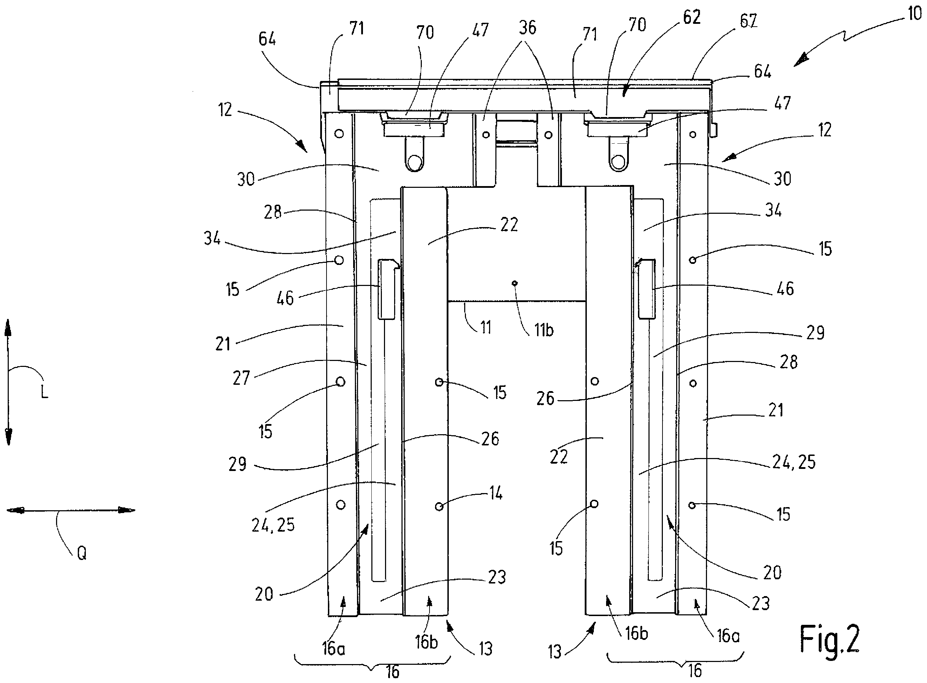

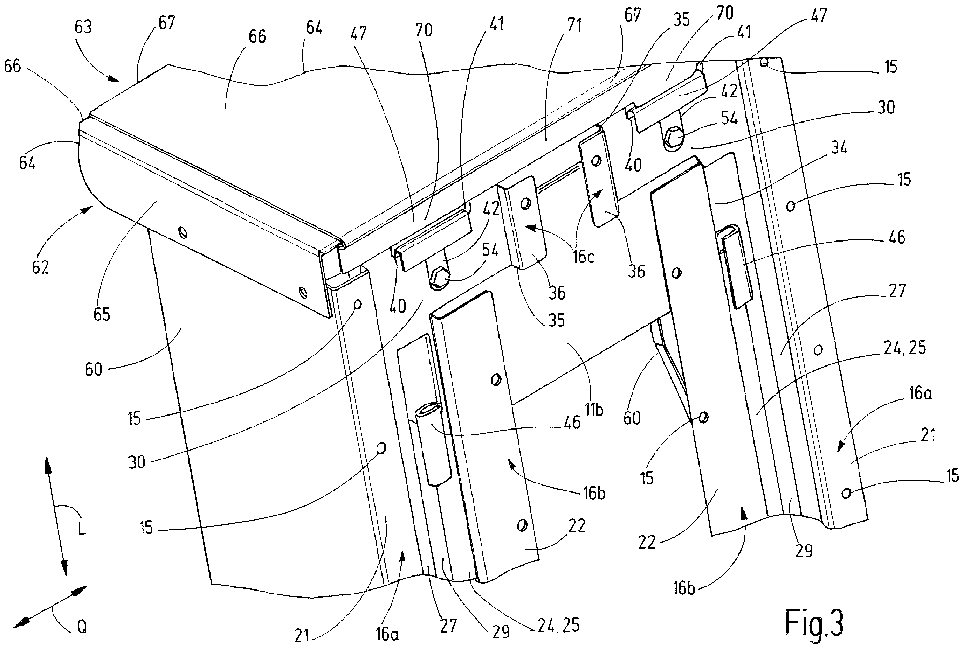

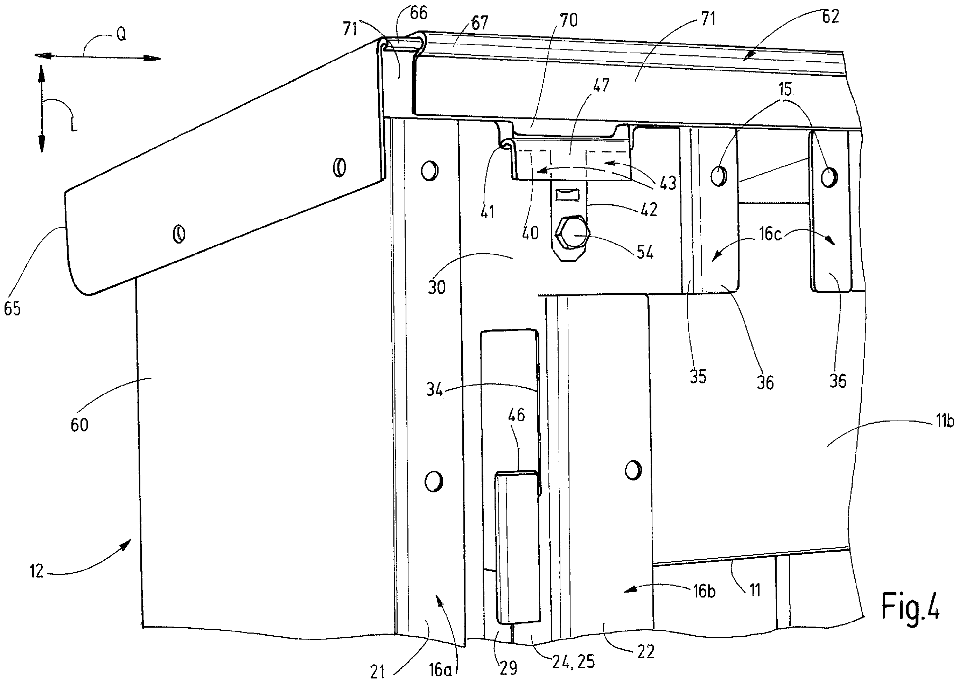

Der Endabschnitt 30 ist insbesondere in den Figuren 3 und 4 veranschaulicht. Der Endabschnitt 30 erstreckt sich ausgehend von der zweiten Verbindungskante 28 (Figur 2) in Querrichtung Q vom ersten Schenkel 21 weg. Erfindungsgemäß geht der Endabschnitt 30 an der der zweiten Verbindungskante 28 in Querrichtung Q entgegengesetzten Seite über eine dritte Verbindungskante 35 in einen dritten Schenkel 36 über. Die dritte Verbindungskante 35 ist durch eine Kröpfung bzw. doppelte Biegung gebildet, die zwischen dem Endabschnitt 30 und dem dritten Schenkel 36 vorhanden ist. Der dritte Schenkel 36 kann, wie bei dem bevorzugten Ausführungsbeispiel, einen dritten Flächenabschnitt 16c der Anlagefläche 16 und wenigstens ein Anbringungsloch 15 aufweisen. Auch der dritte Flächenabschnitt 16c erstreckt sich in derselben Ebene wie die beiden anderen Flächenabschnitte 16a, 16b. Bei einem hier beschriebenen Ausführungsbeispiel hat der dritte Schenkel 36 in Querrichtung Q einen größeren Abstand vom ersten Schenkel 21 als der zweite Schenkel 22. Der zweite Schenkel 22 ist in Längsrichtung L kürzer als der erste Schenkel 21. Beispielsgemäß entspricht die Länge des ersten Schenkels 21 etwa der Summe der Länge des zweiten Schenkels 22 und des dritten Schenkels 36.

Der Endabschnitt 30 weist auf seiner dem Halteabschnitt 25 abgewandten Seite eine Arretierkante 40 auf. Die Arretierkante 40 erstreckt sich in Querrichtung Q. Beim Ausführungsbeispiel ist sie gegenüber einer rechteckigen Außenkontur des Endabschnitts 30 zurückgesetzt. Dies ist dadurch erreicht, dass eine Arretieraussparung 41 im Endabschnitt 30 vorhanden ist, die auf einer Seite durch die Arretierkante 40 begrenzt wird. Die Arretieraussparung 41 ist beim Ausführungsbeispiel auf der der Arretierkante 40 entgegengesetzten Seite offen. Die Arretierkante 40 ist beispielsgemäß durch eine Aussparung 42 unterbrochen. Die Aussparung 42 erstreckt sich in Längsrichtung L rechtwinklig von der Arretierkante 40 weg in den Endabschnitt 30 hinein. An die Arretierkante 40 schließt sich in Längsrichtung L unmittelbar benachbart ein Arretierabschnitt 43 des Halteteils 12 bzw. des Endabschnitts 30 an. Die Funktion dieses Arretierabschnitts 43 wird später noch erläutert.

Die Haltevorrichtung 10 weist außerdem für jedes Halteteil 12 ein Befestigungsteil 46 sowie wenigstens ein Arretierteil 47 auf. Das Befestigungsteil 46 und das Arretierteil 47 sind bei dem bevorzugten Ausführungsbeispiel baugleich ausgeführt.

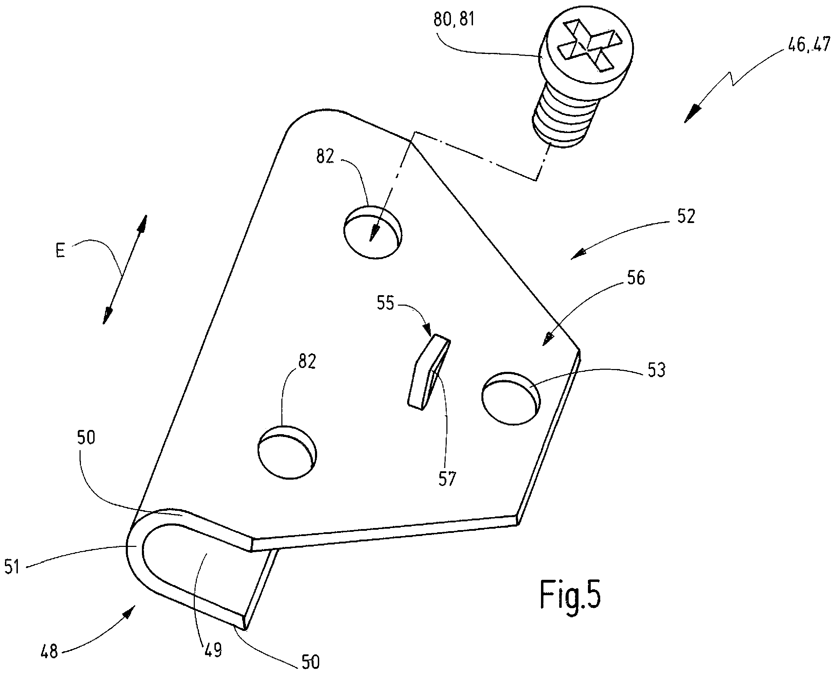

Das Befestigungsteil 46 und/oder das Arretierteil 47 hat einen Arbeitsbereich 48, der von einem Spalt 49 durchsetzt wird (Figur 5). Der Spalt 49 ist in seiner Erstreckungsrichtung E durchgehend ununterbrochen ausgeführt. Der Spalt 49 ist somit in Erstreckungsrichtung E an beiden Enden offen. Zusätzlich ist der Spalt 49 an einer Seite quer zur Erstreckungsrichtung E durchgängig offen, so dass er die Gestalt einer offenen Nut aufweist. Der Spalt 49 ist somit in drei Raumrichtungen durch den Arbeitsabschnitt 48 des Befestigungsteils 46 bzw. Arretierteils 47 begrenzt. Hierfür kann der Arbeitsabschnitt 48 zwei Schenkelteile 50 aufweisen, die den Spalt 49 auf entgegengesetzten Seiten begrenzen. Die beiden Schenkelteile 50 sind durch ein Querteil 51 miteinander verbunden. Beispielsweise können die beiden Schenkelteile 50 und das Querteil 51 durch Umbiegen eines plattenförmigen Ausgangsteils gebildet werden, so dass der Arbeitsabschnitt 48 in einem Querschnitt rechtwinklig zur Erstreckungsrichtung E eine U-förmige Gestalt aufweist. Das Befestigungsteil 46 bzw. das Arretierteil 47 kann daher als Stanzteil und/oder Biegeteil ausgeführt sein.

An eines der beiden Schenkelteile 50 schließt sich an den Arbeitsabschnitt 48 ein Befestigungsabschnitt 52 an. Der Befestigungsabschnitt 52 hat beim Ausführungsbeispiel eine plattenförmige Gestalt. Der Befestigungsabschnitt 52 kann sich ausgehend vom Schenkteil 50 weg verjüngen und hat beispielsgemäß eine trapezförmige Außenkontur. Mit Hilfe eines Befestigungsloches 53 im Befestigungsabschnitt 52 kann das Befestigungsteil 46 bzw. das Arretierteil 47 über ein Befestigungsmittel, beispielsweise eine Befestigungsschraube 54 mit dem Gehäuse 11 verbunden werden. Beim Ausführungsbeispiel ist lediglich ein Befestigungsloch 53 im Befestigungsabschnitt 52 vorhanden. Um ein Verdrehen des Befestigungsteils 46 bzw. des Arretierteils 47 um die Längsachse des Befestigungsloches 53 zu vermeiden, weist der Befestigungsabschnitt 52 eine Verdrehsicherung 55 auf. Die Verdrehsicherung 55 ist durch einen von einer Befestigungsfläche 56, mit der der Befestigungsabschnitt 52 am Gehäuse 11 anliegt, wegragenden Anschlag mit einer Anschlagfläche 57 gebildet. Die Anschlagfläche 57 ist rechtwinklig zur Befestigungsfläche 56 ausgerichtet und liegt bei hergestellter Verbindung des Befestigungsteils 46 bzw. des Arretierteils 47 mit dem Gehäuse 11 an einer seitlichen Wand 11a des Gehäuses 11 zumindest teilweise an oder hat einen lediglich geringen Abstand gegenüber dieser seitlichen Wand. Dadurch ist ein Verdrehen des Befestigungsteils 46 bzw. des Arretierteils 47 um die Längsachse des Befestigungsloches 53 vermieden oder zumindest begrenzt.

Der die Anschlagfläche 57 aufweisende Anschlag ist beispielsgemäß durch Einbringen zweier paralleler Schlitze in den Befestigungsabschnitt 52 und auswölben des zwischen den Schlitzen gebildeten Steges hergestellt. Es versteht sich, dass auch andere Anschläge oder Vorsprünge mit einer Anschlagfläche 57 verwendet werden könnten. Anstelle eines Vorsprungs mit der Anschlagfläche 57 kann die Verdrehsicherung 55 auch durch andere Mittel oder Maßnahmen erreicht werden, beispielsweise durch das Vorsehen von zwei Befestigungslöchern 53 und jeweils einer Befestigungsschraube 54.

Dadurch, dass beispielsgemäß lediglich eine Befestigungsschraube 54 zum Befestigen des Befestigungsteils 46 bzw. des Arretierteils 47 an der Rückwand des Gehäuses 11 verwendet wird, ist es möglich, das Befestigungsteil 46 bzw. das Arretierteil 47 in unterschiedlichen Drehlagen festzulegen. Die Längsachse der Schraubverbindung zwischen dem Befestigungsteil 46 bzw. Arretierteil 47 ist dabei im Eckbereich der Rückwand vorgesehen, so dass der Abstand zu beiden an diesen Eckbereich angrenzenden seitlichen Wänden 11a des Gehäuses 11 gleich groß ist. Die Anschlagfläche 57 kann somit mit der einen oder der anderen seitlichen Wand 11a zusammenwirken, um eine Verdrehung zu begrenzen. Auf diese Weise ist es möglich, die Erstreckungsrichtung E des Spalts 49 entweder in Längsrichtung L oder in Querrichtung Q auszurichten. Ist die Schraubverbindung zwischen dem Befestigungsteil 46 bzw. dem Arretierteil 47 und dem Gehäuse 11 vollständig angezogen, ist ein Verdrehen verhindert. Wird diese Schraubverbindung zumindest teilweise gelöst, kann das Befestigungsteil 46 bzw. Arretierteil 47 um die Längsachse des Befestigungsloches 53 geschwenkt werden.

Zum Halten des Gehäuses 11 arbeitet das wenigstens eine Arretierteil 47 mit dem zugeordneten Arretierabschnitt 43 und jedes Befestigungsteil 46 mit dem zugeordneten Halteabschnitt zusammen, was später noch erläutert wird.

Bei dem hier beschriebenen Ausführungsbeispiel weisen die beiden Halteteile 12 außerdem jeweils einen Seitenwandabschnitt 60 auf, der sich schräg oder rechtwinklig von der Ebene, in der sich die Anlagefläche 16 befindet, weg erstreckt. Zwischen den beiden Seitenwandabschnitten 60 der Halteteile 12 ist ein Aufnahmebereich 61 für das Gehäuse 11 gebildet. Die Seitenwandabschnitte 60 stellen einen Schutz für das Gehäuse 11 gegen Witterungs- oder Umwelteinflüsse, wie Sonneneinstrahlung oder Niederschlag dar.

Die Haltevorrichtung 10 weist bei dem hier beschriebenen Ausführungsbeispiel außerdem ein Verbindungsteil 62 auf. Das Verbindungsteil 62 verbindet die beiden Halteteile 12 miteinander und erstreckt sich in Querrichtung Q von einem Halteteil 12 zum jeweils anderen Teil 12. Beispielsgemäß hat das Verbindungsteil 62 einen den Aufnahmebereich 61 in Längsrichtung L an einer Seite begrenzenden Wandabschnitt 63. Der Wandabschnitt 63 bildet beispielsweise als Dach zum Schutz des Gehäuses 11.

Das Verbindungsteil 62 weist beim Ausführungsbeispiel zwei aneinander oder ineinander verschiebbare Verbindungselemente 64 auf. Beide Verbindungselemente 64 haben jeweils ein seitliches Ende 65. Das seitliche Ende 65 ist durch einen plattenförmigen Abschnitt gebildet. Das seitliche Ende 65 dient zur Verbindung des jeweiligen Verbindungselements 64 mit dem zugeordneten Halteteil 12 und beispielsgemäß mit dem Seitenwandabschnitt 60 des Halteteils 12. Beispielsweise kann die Verbindung durch eine Schraubverbindung hergestellt werden. Das plattenförmige seitliche Ende 65 ist dabei parallel zum Seitenwandabschnitt 60 ausgerichtet.

An das seitliche Ende 65 schließt sich jeweils rechtwinklig dazu ein Elementabschnitt 66 des Verbindungselements 64 an. Der Elementabschnitt 66 des einen Verbindungselements 64 hat an seinen beiden in Querrichtung Q verlaufenden Kantenbereichen jeweils eine gebogene Kante 67, die einen Führungsspalt für den jeweils anderen Elementabschnitt 66 bildet. Durch die beiden Führungsspalte, die durch die beiden gebogenen Kanten 67 des einen Elementabschnitts 66 gebildet sind, kann das jeweils andere Verbindungselement 64 mit seinem Elementabschnitt 66 in den Führungsspalten geführt verschiebbar angeordnet werden. Dadurch lässt sich die Abmessung des Verbindungsteils 62 und mithin der Abstand der beiden seitlichen Enden 65 variieren. Der Wandabschnitt 63 ist durchgängig flächig durch die Elementabschnitte 66 geschlossen. Auf diese Weise kann das Verbindungsteil 62 von einer minimalen Abmessung bis zu einer maximalen Abmessung verändert werden. Die Abmessung zwischen den beiden seitlichen Enden 65 kann sich um bis zu fast 100% vergrößern. Eine Verdoppelung der Abmessung ausgehend von der minimalen Abmessung ist nicht ganz möglich, da eine gewisse Überlappung der beiden Elementabschnitte 66 in Querrichtung erforderlich ist. Ansonsten würden die beiden Verbindungselemente 64 nicht mehr aneinander geführt sein.

In der Ebene, in der sich die Arretierabschnitte 43 bzw. die Arretierkanten 40 der beiden Halteteile 12 befinden, weißt das Verbindungsteil 62 wenigstens einen Sicherungsabschnitt 70 auf. Da beispielsgemäß jedes Halteteil 12 über einen Arretierabschnitt 43 verfügt, sind entsprechend zwei Sicherungsabschnitte 70 vorhanden. Die beiden Sicherungsabschnitte 70 sind beispielsgemäß an jeweils einem Sicherungsschenkel 71 vorhanden. Die Sicherungsschenkel 71 verlaufen in Querrichtung Q unmittelbar angrenzend an die Endabschnitte 30 der beiden Halteteile 12 bzw. an die Arretieraussparungen 41.

Bei dem hier beschriebenen Ausführungsbeispiel weist jedes der beiden Verbindungselemente 64 einen Sicherungsabschnitt 70 an einem Sicherungsschenkel 71 auf. Die beiden Sicherungsschenkel 71 liegen durch die aneinander verschiebbaren Verbindungselemente 64 aneinander an. Jeder Sicherungsschenkel 71 hat einen Sicherungsabschnitt 70 mit einem in die zugeordnete Sicherungsaussparung 41 hineinragenden Vorsprung. Der Abstand des Sicherungsabschnitts 70 vom seitlichen Ende 65 ist an den Abstand des Arretierabschnitts 43 vom Seitenwandabschnitt 60 angepasst und bleibt unabhängig vom Abstand der Halteteile 12 in Querrichtung Q konstant. Da sich die Abmessung des Verbindungsteils 62 und der Abstand der beiden Halteteile 12 ändern kann, kann durch diese Ausgestaltung sichergestellt werden, dass der jeweilige Sicherungsabschnitt 70 dem zugeordneten Arretierabschnitt 43 zugeordnet bleibt.

Die Halteteile 12 und/oder das Verbindungsteil 62 und/oder die Befestigungsteile 46 und/oder das wenigstens eine Arretierteil 47 können aus einer plattenförmigen Ausgangsmaterial hergestellt sein, beispielsweise durch Schneiden und/oder Stanzen und Biegen eine Metallblechs.

Die Haltevorrichtung 10 wird wie nachfolgend beschrieben verwendet, um ein Gehäuse 11 mittelbar an einer Anbringungsfläche anzuordnen.

Zunächst werden die beiden Halteteile 12 mit ihrer jeweiligen Anlagefläche 16 an der Anbringungsfläche angelegt und dort befestigt, beispielsweise mittels einer Schraubverbindung oder dergleichen. Die Art der Verbindung hängt insbesondere davon ab, wie die Anbringungsfläche ausgestaltet ist. Handelt es sich beispielsweise um eine Außenwand eines Gebäudes, kann auch eine Dübelverbindung zum Anbringen der Halteteile 12 an der Anbringungsfläche verwendet werden.

Der Abstand der beiden Halteteile 12 in Querrichtung Q wird dabei abhängig von der Abmessung des Gehäuses 11 in Querrichtung Q festgelegt.

An einer Rückwand 11b des Gehäuses 11 werden die beiden Befestigungsteile 46 sowie die beiden Arretierteile 47 befestigt. Dabei ist die Erstreckungsrichtung E der Spalte 49 der beiden Befestigungsteile 46 in Längsrichtung L ausgerichtet, während die Erstreckungsrichtung E der Spalte 49 der beiden Arretierteile 47 in Querrichtung Q ausgerichtet ist.

Die beiden zuvor beschriebenen Schritte können zeitlich unabhängig voneinander ausgeführt werden.

Das derart vorbereitete Gehäuse 11 wird nunmehr an den Halteteilen 12 angeordnet. Hierfür werden zunächst die Arbeitsabschnitte 48 der beiden Befestigungsteile 46 in jeweils eine zugeordnete Einführungsaussparung 34 eingeführt. Anschließend wird das Gehäuse 11 mit den beiden Befestigungsteilen 46 in Längsrichtung L verschoben, so dass der jeweilige Halteabschnitt 25 bzw. Halteschenkel 24 in Eingriff gelangt mit dem zugeordneten Befestigungsteil 46. Dabei dringt der Halteschenkel 24 in den zugeordneten Spalt 49 des Befestigungsteils 46 ein und der Arbeitsabschnitt 48 des Befestigungsteils 46 umgreift den Halteabschnitt 25.

Wenn die Halteschenkel 24 mit dem jeweils zugeordneten Befestigungsteil 46 in Eingriff stehen, kann das Gehäuse 11 entlang der Halteschenkel 24 in Längsrichtung L bewegt werden. In die anderen Richtungen wird eine Bewegung des Gehäuses 11 verhindert bzw. begrenzt. Lediglich das verbleibende Bewegungsspiel zwischen dem Halteschenkel 24 und dem zugeordneten Befestigungsteil 46 erlaubt eine geringfügige Bewegung des Gehäuses 11 in Querrichtung Q bzw. rechtwinklig zur Längsrichtung L und zur Querrichtung Q gegenüber der Anbringungsfläche.

Das Gehäuse 11 wird nun so weit in Längsrichtung L bewegt, beispielsgemäß vertikal nach unten, bis die beiden Arretierteile 47 in Eingriff gelangen mit dem jeweils zugeordneten Arretierabschnitt 43. Die Arretierteile 47 sind beim Ausführungsbeispiel vertikal oberhalb der Befestigungsteile 46 am Gehäuse 11 angeordnet. Sie haken sozusagen am jeweils zugeordneten Arretierabschnitt 43 ein und verhindern eine weitere Bewegung des Gehäuses 11 in Längsrichtung L zumindest zu einer Seite hin, beispielsgemäß vertikal nach unten.

Schließlich wird das Verbindungsteil 62 montiert. Zunächst wird eines der beiden seitlichen Enden 65 an einem Seitenwandabschnitt 60 des einen Halteteils 12 befestigt, beispielsgemäß über eine Schraubverbindung. Anschließend wird das jeweils andere Verbindungselement 64 in eine Stellung gebracht, so dass die Abmessung des Verbindungsteils 63 in Querrichtung Q in etwa dem Abstand der beiden Seitenwandabschnitte 60 in Querrichtung Q entspricht. Anschließend wird das betreffende andere seitliche Ende 65 mit dem anderen Seitenwandabschnitt 60 verbunden, beispielsgemäß über eine Schraubverbindung.

Durch das Anbringen des Verbindungsteils 62 an den beiden Halteteilen 12 und beispielsgemäß den Seitenwandabschnitten 60 gelangt der jeweilige Sicherungsabschnitt 70 jedes Verbindungselements 64 in eine Position, in der er in Längsrichtung L unter einem vorgegebenen Abstand zum Arretierabschnitt 43 bzw. der Arretierkante 40 angeordnet ist. Dadurch wird unterbunden, dass die Arretierteile 47 mit dem jeweils zugeordneten Arretierabschnitt 43 außer Eingriff gebracht werden können. Zwar kann ein gewisses Bewegungsspiel zwischen dem Arretierteil 47 und dem zugeordneten Sicherungsabschnitt 70 verbleiben, jedoch kann das Arretierteil 47 nicht vollständig außer Eingriff mit dem Arretierabschnitt 43 gebracht werden. Dadurch ist ein Abnehmen des Gehäuses 11 von der Halteeinrichtung 10 nicht mehr möglich.

Das Befestigungsteil 46 und/oder das Arretierteil 47 kann ein Spannmittel 80 aufweisen. Über das Spannmittel 80 kann ein Bewegungsspiel zwischen dem Befestigungsteil 46 und dem zugeordneten Halteabschnitt 25 bzw. zwischen dem Arretierteil 47 und dem zugeordneten Arretierabschnitt 43 eliminiert oder zumindest verringert werden. Beim Ausführungsbeispiel dient als Spannmittel 80 eine Spannschraube 81. Die Spannschraube 81 kann in eine Gewindeöffnung 82 eingeschraubt werden, die zumindest teilweise im Arbeitsabschnitt 48 angeordnet ist. Bei dem hier dargestellten Ausführungsbeispiel weist das Befestigungsteil 46 bzw. das Arretierteil 47 jeweils zwei Gewindeöffnungen 82 mit jeweils einer zugeordneten Spannschraube 81 auf. Alternativ hierzu kann auch eine Gewindeöffnung 82 und eine Spannschraube 81 ausreichen.

Nach dem Anordnen des Gehäuses 11 an den Halteteilen 12 können die Spannschrauben 81 angezogen und dadurch ein Bewegungsspiel reduziert oder eliminiert werden. Das Gehäuse 11 kann dadurch gegen Klappern gesichert werden.

Die Demontage des Gehäuses 11 bzw. der Haltevorrichtung 10 kann in entsprechend umgekehrter Reihenfolge erfolgen.

Die Erfindung betrifft eine Haltevorrichtung 10 für ein Gehäuse 11 sowie ein Verfahren zum Anbringen der Haltevorrichtung 10 und des Gehäuses 11 an einer Anbringungsfläche, insbesondere einer Gebäudefläche, beispielsweise einer Gebäudeaußenfläche. Die Haltevorrichtung 10 begrenzt einen Aufnahmebereich 61 für das Gehäuse 11 vorzugsweise durch Wandabschnitte 60, 63 und kann damit einen Schutz vor Sonneneinstrahlung, Niederschlag und anderen Witterungs- oder Umwelteinflüssen bereitstellen. Die Haltevorrichtung 10 hat zwei Halteteile 12 mit jeweils einem in einer Längsrichtung L verlaufenden Halteabschnitt 25. Zumindest eines der beiden Halteteile 12 hat außerdem einen Arretierabschnitt 43. An einer Rückwand 11b des Gehäuses 11 sind zwei Befestigungsteile 46 und für jeden Arretierabschnitt 43 ein Arretierteil 47 angebracht. Zur Lagerung des Gehäuses 11 an der Haltevorrichtung 10 werden zunächst die beiden Befestigungsteile 46 in Eingriff gebracht mit dem jeweils zugeordneten Halteabschnitt 25. Durch eine Verschiebung des Gehäuses 11 in die Längsrichtung L gelangt das wenigstens eine Arretierteil 47 in Eingriff mit dem Arretierabschnitt 43. Dadurch wird eine fortgesetzte Bewegung des Gehäuses 11 in Längsrichtung L zumindest begrenzt. Jedem Arretierteil 47 kann ein Sicherungsabschnitt 70 zugeordnet sein, der außerdem die Bewegung des Arretierteils 47 vom zugeordneten Arretierabschnitt 43 weg begrenzt. Der Sicherungsabschnitt 70 ist vorzugsweise an einem Verbindungsteil 62 vorhanden, das die beiden Halteteile 12 verbindet.

### Bezugszeichenliste:

- 10: Haltevorrichtung
- 11: Gehäuse
- 11a: seitliche Wand
- 11b: Rückwand
- 12: Halteteil
- 13: Anbringungsabschnitt
- 14: Schraube
- 15: Anbringungsloch
- 16: Anlagefläche
- 16a: erster Flächenabschnitt
- 16b: zweiter Flächenabschnitt
- 16c: dritter Flächenabschnitt

- 20: Haltebereich
- 21: erster Schenkel
- 22: zweiter Schenkel
- 23: Steg
- 24: Halteschenkel
- 25: Halteabschnitt
- 26: erste Verbindungskante
- 27: Längsschenkel
- 28: zweite Verbindungskante
- 29: Längsschlitz
- 30: Endabschnitt

- 34: Einführaussparung
- 35: dritte Verbindungskante
- 36: dritter Schenkel

- 40: Arretierkante
- 41: Arretieraussparung
- 42: Aussparung
- 43: Arretierabschnitt

- 46: Befestigungsteil
- 47: Arretierteil
- 48: Arbeitsabschnitt
- 49: Spalt
- 50: Schenkelteil
- 51: Querteil
- 52: Befestigungsabschnitt
- 53: Befestigungsloch
- 54: Befestigungsschraube
- 55: Verdrehsicherung
- 56: Befestigungsfläche
- 57: Anschlagfläche

- 60: Seitenwandabschnitt
- 61: Aufnahmebereich
- 62: Verbindungsteil
- 63: Wandabschnitt
- 64: Verbindungselement
- 65: seitliches Ende
- 66: Elementabschnitt
- 67: Gebogene Kante*

- 70: Sicherungsabschnitt
- 71: Sicherungsschenkel

- 80: Spannmittel
- 81: Spannschraube
- 82: Gewindeöffnung

- L: Längsrichtung
- Q: Querrichtung

## Patentansprüche

1. Haltevorrichtung (10) für ein Gehäuse (11),
mit zwei Halteteilen (12), die einen Anbringungsabschnitt (13) aufweisen, der dazu eingerichtet ist, mittels eines Anbringungsmittels (14) an einer Anbringungsfläche angebracht zu werden,
wobei jedes Halteteil (12) einen sich in einer Längsrichtung (L) erstreckenden Halteabschnitt (25) aufweist,
mit wenigstens zwei an dem Gehäuse (11) befestigbaren Befestigungsteilen (46), die jeweils mit dem Halteabschnitt (25) eines zugeordneten Halteteils (12) zur Herstellung einer Verbindung in Eingriff bringbar sind, und bei hergestellter Verbindung eine Relativbewegung in Längsrichtung (L) zwischen dem Befestigungsteil (46) und dem Halteteil (12) zulässt,
mit einem Verbindungsteil (62), das zur lösbaren Verbindung mit den beiden Halteteilen (12) eingerichtet ist und bei hergestellter Verbindung in Längsrichtung (L) mit Abstand zu den Halteabschnitten (25) angeordnet ist,
und mit einem am Gehäuse befestigbaren Arretierteil (47),
**dadurch gekennzeichnet, dass** das Arretierteil (47) mit einem Arretierabschnitt (43) an einem der beiden Halteteile (12) derart in Eingriff bringbar ist, dass die Relativbewegung in Längsrichtung (L) zwischen dem Befestigungsteil (46) und dem Halteteil (12) begrenzt oder unterbunden ist,
dass das Verbindungsteil (62) zwei aneinander oder ineinander verschiebbare Verbindungselemente (64) aufweist, wodurch die Abmessung des Verbindungsteils (62) veränderbar ist,
dass das Verbindungsteil (62) wenigstens einen Sicherungsabschnitt (70) aufweist, der bei hergestellter Verbindung des Verbindungsteils (62) mit den beiden Halteteilen (12) eine Bewegung eines zugeordneten Arretierteils (47) in Längsrichtung (L) begrenzt oder unterbindet,
und dass die beiden Halteteile (12) als separate Halteteile (12) ausgeführt und dazu eingerichtet sind in einem beliebigen Abstand an der Anbringungsfläche angebracht zu werden.

2. Haltevorrichtung nach Anspruch 1,
**dadurch gekennzeichnet, dass** zwei Arretierteile (47) vorhanden sind, die jeweils einem Arretierabschnitt (43) an einem der beiden Halteteile (12) zugeordnet sind.

3. Haltevorrichtung nach Anspruch 1 oder 2,
**dadurch gekennzeichnet, dass** das Arretierteil (47) und das Befestigungsteil (46) baugleich sind.

4. Haltevorrichtung nach einem der vorhergehenden Ansprüche,
**dadurch gekennzeichnet, dass** das wenigstens eine Arretierteil (47) und/oder jedes Befestigungsteil (46) zwei mit Abstand zueinander angeordnete Schenkelteile (50) aufweist, die einen zwischen den Schenkelteilen (50) angeordneten Spalt (49) begrenzen.

5. Haltevorrichtung nach Anspruch 4,
**dadurch gekennzeichnet, dass** das Arretierteil (47) den zugeordneten Arretierabschnitt (43) am Halteteil (12) und/oder das Befestigungsteil (46) den zugeordneten Halteabschnitt (25) am Halteteil (12) umgreift.

6. Haltevorrichtung nach Anspruch 4 oder 5,
**dadurch gekennzeichnet, dass** der Spalt (49) des Arretierteils (47) durch ein die beiden Schenkelteile (50) verbindendes Querteil (51) in Längsrichtung (L) an einer Seite zumindest teilweise verschlossen ist.

7. Haltevorrichtung nach einem der Ansprüche 4 bis 6,
**dadurch gekennzeichnet, dass** der Spalt (49) des Befestigungsteils (46) durch ein die beiden Schenkelteile (50) verbindendes Querteil (51) in einer Querrichtung (Q), die rechtwinkelig zur Längsrichtung (L) orientiert ist, Längsrichtung (L) an einer Seite zumindest teilweise verschlossen ist.

8. Haltevorrichtung nach einem der vorhergehenden Ansprüche,
**dadurch gekennzeichnet, dass** der Halteabschnitt (25) des Halteteils (12) an einen sich in einer Längsrichtung (L) erstreckenden Längsschlitz (29) angrenzt.

9. Haltevorrichtung nach Anspruch 8,
**dadurch gekennzeichnet, dass** der Längsschlitz (29) in eine in Längsrichtung (L) an den Halteabschnitt (24) angrenzende Einführaussparung (34) mündet.

10. Haltevorrichtung nach einem der vorhergehenden Ansprüche,
**dadurch gekennzeichnet, dass** zumindest eines der beiden Halteteile (12) eine Arretieraussparung (41) aufweist, an die der Arretierabschnitt (43) angrenzt.

11. Haltevorrichtung nach einem der vorhergehenden Ansprüche,
**dadurch gekennzeichnet, dass** die Arretieraussparung (41) in Längsrichtung (L) an der dem Halteabschnitt (25) abgewandten Seite offen ist.

12. Haltevorrichtung nach einem der vorhergehenden Ansprüche,
**dadurch gekennzeichnet, dass** zumindest eines der Halteteile (12) einen Seitenwandabschnitt (60) aufweist, der schräg oder rechtwinkelig vom Anbringungsabschnitt (13) wegragt und einen Aufnahmebereich (61) für das Gehäuse (11) begrenzt.

13. Haltevorrichtung nach einem der vorhergehenden Ansprüche,
**dadurch gekennzeichnet, dass** das Verbindungsteil (62) einen Wandabschnitt (63) aufweist, der bei hergestellter Verbindung mit den beiden Halteteilen (12) schräg oder rechtwinkelig von den Anbringungsabschnitten (13) weg ragt.

14. Haltevorrichtung nach einem der vorhergehenden Ansprüche,
**dadurch gekennzeichnet, dass** das Gehäuse (11) nur über die Befestigungsteile (46) und das Arretierteil (47) mit den beiden Halteteilen (12) verbunden ist.

15. Verfahren zur Montage eines Gehäuses (11) an einer Anbringungsfläche unter Verwendung einer Haltevorrichtung (10) nach einem der vorhergehenden Ansprüche, mit folgenden Schritten:
- Anbringen der beiden Halteteile (12) mit dem jeweiligen Anbringungsabschnitt (13) mittels eines Anbringungsmittels an einer Anbringungsfläche,
- Befestigen der Befestigungsteile (46) und des wenigstens einen Arretierteils (47) am Gehäuse (11),
- in Eingriff bringen der wenigstens zwei Befestigungsteile (46) mit jeweils einem zugeordneten Halteabschnitt (25), so dass die Befestigungsteile (46) entlang des Halteabschnitts (25) in Längsrichtung (L) bewegbar sind,
- in Eingriff bringen des wenigstens einen Arretierteils (47) mit einem zugeordneten Arretierabschnitt (43) derart, dass die Relativbewegung in Längsrichtung (L) zwischen dem Befestigungsteil (46) und dem Halteteil (25) begrenzt oder unterbunden ist,
- Verbinden des Verbindungsteils (62) mit den beiden Halteteilen (12).

## Claims

1. Holding device (10) for a casing (11),
with two holding parts (12) which each comprise an attachment portion (13) that is configured so as to be attached to an attachment surface by means of an attachment means (14),
wherein each holding part (12) has a holding portion (25) extending in a longitudinal direction (L),
with at least two fixing parts (46) which can be fixed to the casing (11), and each of which can be brought into engagement with the holding portion (25) of an assigned holding part (12) in order to create a connection, and which, when the connection is created, allows a relative movement in the longitudinal direction (L) between the fixing part (46) and the holding part (12),
with a connecting part (62) which is configured for releasable connection to the two holding parts (12) and which, when the connection is created, is arranged at a distance from the holding portions (25) in the longitudinal direction (L),
and with a locking part (47) which can be fixed to the casing,
**characterised in that**
the locking part (47) can be brought into engagement with a locking portion (43) on one of the two holding parts (12) such that the relative movement in the longitudinal direction (L) between the fixing part (46) and the holding part (12) is limited or suppressed,
that the connecting part (62) comprises two connecting elements (64) which can be displaced on each other or into each other, whereby the dimension of the connecting part (62) can be changed,
that the connecting part (62) has at least one securing portion (70) which, when the connection of the connecting part (62) to the two holding parts (12) is created, limits or suppresses a movement of an assigned locking part (47) in the longitudinal direction (L),
and that the two holding parts (12) are designed as separate holding parts (12) and are configured to be attached to the attachment surface with an arbitrary spacing.

2. Holding device according to claim 1, **characterised in that** two locking parts (47) are present which are each assigned to a respective locking portion (43) on one of the two holding parts (12).

3. Holding device according to claim 1 or 2, **characterised in that** the locking part (47) and the fixing part (46) are structurally identical.

4. Holding device according to any of the preceding claims, **characterised in that** the at least one locking part (47) and/or each fixing part (46) comprises two leg parts (50) that are arranged spaced apart from each other and delimit a gap (49) arranged between the leg parts (50).

5. Holding device according to claim 4, **characterised in that** the locking part (47) surrounds the assigned locking portion (43) on the holding part (12) and/or the fixing part (46) surrounds the assigned holding portion (25) on the holding part (12).

6. Holding device according to claim 4 or 5, **characterised in that** the gap (49) of the locking part (47) is at least partially closed on one side in the longitudinal direction (L) by a crosspiece (51) connecting the two leg parts (50).

7. Holding device according to any of claims 4 to 6, **characterised in that** the gap (49) of the fixing part (46) is at least partially closed on one side in the longitudinal direction (L) by a crosspiece (51) connecting the two leg parts (50) in a transverse direction (Q) which is oriented at right angles to the longitudinal direction (L).

8. Holding device according to any of the preceding claims, **characterised in that** the holding portion (25) of the holding part (12) adjoins a longitudinal slot (29) extending in a longitudinal direction (L).

9. Holding device according to claim 8, **characterised in that** the longitudinal slot (29) opens into an insertion recess (34) adjoining the holding portion (24) in the longitudinal direction (L).

10. Holding device according to any of the preceding claims, **characterised in that** at least one of the two holding parts (12) has a locking recess (41) adjoining the locking portion (43).

11. Holding device according to any of the preceding claims, **characterised in that** the locking recess (41) is open in the longitudinal direction (L) on the side facing away from the holding portion (25).

12. Holding device according to any of the preceding claims, **characterised in that** at least one of the holding parts (12) has a side wall portion (60) which protrudes obliquely or at right angles away from the attachment portion (13) and delimits a receiving region (61) for the casing (11).

13. Holding device according to any of the preceding claims, **characterised in that** the connecting part (62) has a wall portion (63) which, when the connection to the two holding parts (12) is made, protrudes obliquely or at right angles away from the attachment portions (13).

14. Holding device according to any of the preceding claims, **characterised in that** the casing (11) is connected to the two holding parts (12) solely via the fixing parts (46) and the locking part (47).

15. Method for mounting a casing (11) to an attachment surface using a holding device (10) according to any of the preceding claims, with the following steps:
- attachment of the respective attachment portions (13) of the two holding parts (12) to an attachment surface by means of an attachment means,
- fixing of the fixing parts (46) and the at least one locking part (47) to the casing (11),
- bringing the at least two fixing parts (46) into engagement with a respective assigned holding portion (25) so that the fixing parts (46) are movable in the longitudinal direction (L) along the holding portion (25),
- bringing the at least one locking part (47) into engagement with an assigned locking portion (43) such that the relative movement in the longitudinal direction (L) between the fixing part (46) and the holding part (25) is limited or suppressed,
- connecting the connecting part (62) to the two holding parts (12).

## Revendications

1. Dispositif de support (10) pour un boîtier (11),
comprenant deux éléments de support (12) qui présentent une partie de montage (13) conçue pour être fixée sur une surface de montage, à l'aide d'un moyen de montage (14),
chaque élément de support (12) présentant une partie de support (25) qui s'étend dans une direction longitudinale (L),
comprenant au moins deux éléments de fixation (46) qui peuvent être fixés au boîtier (11) et être amenés à coopérer respectivement avec la partie de support (25) d'un élément de support (12) associé, aux fins d'établir une liaison, et, lorsque la liaison est établie, permettent un mouvement relatif, dans la direction longitudinale (L), entre l'élément de fixation (46) et l'élément de support (12),
comprenant une pièce de liaison (62) qui est conçue pour une liaison séparable avec les deux éléments de support (12) et, lorsque la liaison est établie, est placée à distance des parties de support (25), dans la direction longitudinale (L),
et comprenant un élément de blocage (47) pouvant être fixé au boîtier,
**caractérisé en ce que** l'élément de blocage (47) peut être amené à coopérer avec une partie de blocage (43) prévue sur l'un des deux éléments de support (12), de telle sorte que le mouvement relatif entre l'élément de fixation (46) et l'élément de support (12), dans la direction longitudinale (L), soit limité ou empêché,
**en ce que** la pièce de liaison (62) présente deux éléments de liaison (64) pouvant être glissés l'un sur l'autre ou l'un dans l'autre, ce qui permet de modifier la dimension de la pièce de liaison (62),
**en ce que** la pièce de liaison (62) présente au moins une partie de verrouillage (70) qui, lorsque la liaison de la pièce de liaison (62) avec les deux éléments de support (12) est établie, limite ou empêche un mouvement d'un élément de blocage (47) associé, dans la direction longitudinale (L),
et **en ce que** les deux éléments de support (12) sont réalisés comme éléments de support (12) séparés et sont conçus pour être fixés avec un espacement quelconque sur la surface de montage.

2. Dispositif de support selon la revendication 1, **caractérisé en ce qu'**il est prévu deux éléments de blocage (47) qui sont associés respectivement à une partie de blocage (43) sur l'un des deux éléments de support (12).

3. Dispositif de support selon la revendication 1 ou 2, **caractérisé en ce que** l'élément de blocage (47) et l'élément de fixation (46) sont de construction identique.

4. Dispositif de support selon l'une des revendications précédentes, **caractérisé en ce que** l'élément de blocage (47), au nombre d'au moins un, et/ou chaque élément de fixation (46) présente deux parties formant ailes (50) qui sont disposées à distance l'une de l'autre et délimitent un espace libre (49) prévu entre les parties formant ailes (50).

5. Dispositif de support selon la revendication 4, **caractérisé en ce que** l'élément de blocage (47) entoure la partie de blocage (43) associée sur l'élément de support (12) et/ou que l'élément de fixation (46) entoure la partie de support (25) associée sur l'élément de support (12).

6. Dispositif de support selon la revendication 4 ou 5, **caractérisé en ce que** l'espace libre (49) de l'élément de blocage (47) est fermé au moins en partie sur un côté, dans la direction longitudinale (L), par une partie transversale (51) reliant les deux parties formant ailes (50).

7. Dispositif de support selon l'une des revendications 4 à 6, **caractérisé en ce que** l'espace libre (49) de l'élément de fixation (46) est fermé au moins en partie sur un côté, direction longitudinale (L), par une partie transversale (51) reliant les deux parties formant ailes (50), dans une direction transversale (Q) qui est orientée à angle droit par rapport à la direction longitudinale (L).

8. Dispositif de support selon l'une des revendications précédentes, **caractérisé en ce que** la partie de support (25) de l'élément de support (12) est adjacente à une fente longitudinale (29) qui s'étend dans une direction longitudinale (L).

9. Dispositif de support selon la revendication 8, **caractérisé en ce que** la fente longitudinale (29) débouche dans un évidement d'insertion (34) qui est adjacent à la partie de support (24), dans la direction longitudinale (L).

10. Dispositif de support selon l'une des revendications précédentes, **caractérisé en ce qu'**au moins un des deux éléments de support (12) présente un évidement de blocage (41) auquel est contiguë la partie de blocage (43).

11. Dispositif de support selon l'une des revendications précédentes, **caractérisé en ce que** l'évidement de blocage (41) est ouvert dans la direction longitudinale (L), sur le côté opposé à la partie de support (25).

12. Dispositif de support selon l'une des revendications précédentes, **caractérisé en ce qu'**au moins un des éléments de support (12) présente une partie de paroi latérale (60) qui s'étend en biais ou à angle droit depuis la partie de montage (13) et délimite une zone de réception (61) pour le boîtier (11).

13. Dispositif de support selon l'une des revendications précédentes, **caractérisé en ce que** l'élément de liaison (62) présente une partie de paroi (63) qui, lorsque la liaison est établie avec les deux éléments de support (12), s'étend en biais ou à angle droit depuis les parties de montage (13).

14. Dispositif de support selon l'une des revendications précédentes, **caractérisé en ce que** le boîtier (11) est relié aux deux éléments de support (12) uniquement par l'intermédiaire des éléments de fixation (46) et de l'élément de blocage (47).

15. Procédé de montage d'un boîtier (11) sur une surface de montage, en utilisant un dispositif de support (10) selon l'une des revendications précédentes, comprenant les étapes suivantes :
- montage des deux éléments de support (12), avec la partie de montage (13) respective, sur une surface de montage, à l'aide d'un moyen de montage,
- fixation des éléments de fixation (46) et de l'élément de blocage (47), au nombre d'au moins un, sur le boîtier (11),
- mise en coopération des éléments de fixation (46), au nombre d'au moins deux, respectivement avec une partie de support (25) associée, de sorte que les éléments de fixation (46) peuvent être déplacés le long de la partie de support (25), dans la direction longitudinale (L),
- mise en coopération de l'élément de blocage (47), au nombre d'au moins un, avec une partie de blocage (43) associée, de manière à ce que le mouvement relatif entre l'élément de fixation (46) et l'élément de support (25), dans la direction longitudinale (L), soit limité ou empêché,
- établissement de la liaison de l'élément de liaison (62) avec les deux éléments de support (12).
